(19) Europäisches Patentamt
European Patent Office
Office européen des brevets

(11) Veröffentlichungsnummer: **0 042 821**
**B1**

(12) **EUROPÄISCHE PATENTSCHRIFT**

(45) Veröffentlichungstag der Patentschrift: **03.10.84**

(21) Anmeldenummer: **81810251.9**

(22) Anmeldetag: **17.06.81**

(51) Int. Cl.³: **B 01 D 13/00**, B 01 D 13/04, C 22 B 3/00, C 07 C 69/757 // C02F1/62, B01D59/10, B01D59/22

(54) **Verwendung von Succinylobernsteinsäurediestern als Flüssigmembranen und Verfahren zur selektiven Trennung von Kationen.**

(30) Priorität: **23.06.80 CH 4807/80**

(43) Veröffentlichungstag der Anmeldung: **30.12.81 Patentblatt 81/52**

(45) Bekanntmachung des Hinweises auf die Patenterteilung: **03.10.84 Patentblatt 84/40**

(84) Benannte Vertragsstaaten: **CH DE FR GB LI**

(56) Entgegenhaltungen: **GB - A - 2 016 471**

**HELVETICA CHIMICA ACTA, Vol. 62 (1979), Seiten 1682-1687**

(73) Patentinhaber: **CIBA-GEIGY AG, Postfach, CH-4002 Basel (CH)**

(72) Erfinder: **Batzer, Hans, Dr. Prof., Rainweg 7, CH-4144 Arlesheim (CH)**
Erfinder: **Sinnreich, Joel, Dr., Karlstrasse 9, D-6140 Bensheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 042 821 B1

**Beschreibung**

Die vorliegende Erfindung betrifft die Verwendung von in organischen Lösungsmitteln gelösten Succinylobernsteinsäurediestern oder ihren lösungsmittelfreien Schmelzen als kationen-selektive Flüssigmembranen und ein Verfahren zum Trennen mehrwertiger Kationen von einwertigen Kationen oder für die selektive Trennung mehrwertiger, verschiedener Kationen aus wässrigen Lösungen unter Verwendung dieser Flüssigmembranen.

Es ist bekannt, dass man aus wässrigen, Metallsalze enthaltenden Lösungen durch in Kontaktbringen mit organischen Lösungsmitteln, die ein Komplexbildungsmittel gelöst enthalten, die Metall-Kationen herauslösen kann. Solche mindestens ein Komplexbildungsmittel, wie z.B. phenolische Oxime, enthaltende organische Lösungen und deren Verwendung zur Gewinnung von Metall-Kationen aus wässrigen Lösungen werden z.B. in den US-Patenten 3.592.775 und 3.939.203 beschrieben. In diesen Patentschriften wird das in Kontaktbringen der beiden Lösungen durch Schütteln in einem Scheidetrichter oder durch Verrühren der organischen mit der wässrigen Lösung vorgenommen.

Aus «Journal of Membrane Science», 2 (1977), Seite 213–233, ist es ferner bekannt, organische Lösungen, die einen Komplexbildner oder ein sogenanntes «carrier agent» enthalten, als Flüssigmembranen für den gekoppelten Ionentransport zu verwenden. Die Arbeitsweise von kationen-selektiven Flüssigmembranen, die zwischen zwei wässrigen Lösungen mit verschiedenen pH-Werten eingesetzt werden, wird in dem genannten «Journal of Membrane Science» auf Seite 214–216 anhand des gekoppelten $Cu^{2+}/H^+$-Transportes beschrieben. Danach reagiert an der Grenzfläche Flüssigmembran/$Cu^{2+}$-Salzlösung mit höherem pH-Wert das Kupferion mit dem «carrier agent» unter Komplexbildung. Der lediglich in der organischen Phase der Flüssigmembran lösliche Cu-Komplex wird durch die Flüssigmembran zur wässrigen Lösung mit dem niederigeren pH-Wert transportiert, wobei an dieser Grenzfläche Flüssigmembran/wässrige Lösung das komplexgebundene Cu-Kation in die wässrige Lösung freigegeben wird und das «carrier agent» unter Aufnahme von 2 Protonen zur anderen Grenzfläche durch die Flüssigmembran zurückdiffundiert und dort erneut Cu-Kationen komplex bindet.

Die an den beiden Grenzflächen der Flüssigmembran stattfindenden Reaktionen lassen sich durch die folgende Gleichung

$$2\,HR + Cu^{2+} \rightleftharpoons CuR_2 + 2H^+$$

worin HR für ein «carrier agent» steht, wiedergeben.

Mit Hilfe solcher Flüssigmembranen ist es ferner möglich, bestimmte Kationen gegen ihren eigenen Konzentrationsgradienten in einer wässrigen Lösung mit tieferem pH-Wert zu konzentrieren.

Die in dem genannten «Journal of Membrane Science» beschriebenen Flüssigmembranen arbeiten bei relativ niedrigen pH-Werten und sind kationen-selektiv in Bezug auf $Cu^{2+}$ - bzw. $Fe^{3+}$-Kationen.

Es wurde nun gefunden, dass bestimmte Succinylobernsteinsäurediester wertvolle «carrier agents» für Flüssigmembranen darstellen, die einen Einsatz bei wässrigen Lösungen mit vergleichsweise höheren pH-Werten, also unter milderen Bedingungen, erlauben. Mit diesen Flüssigmembranen gelingt eine vollständige Trennung mehrwertiger Kationen von einwertigen Kationen sowie eine selektive Trennung von mehrwertigen verschiedenen Kationen.

Gegenstand vorliegender Erfindung ist somit die Verwendung von in Wasser im wesentlichen unlöslichen Succinylobernsteinsäurediester der Formel I

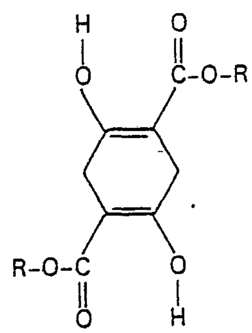

(I),

worin R für ein Alkyl, Alkenyl oder Cycloalkyl mit bis zu 24 C-Atomen, vor allem mit 4 bis 24 C-Atomen, steht, gelöst in einem im wesentlichen mit Wasser nicht mischbaren organischen Lösungsmittel, wobei der Anteil des Succinylobernsteinsäurediesters im organischen Lösungsmittel mindestens 0,01 Gewichts-%, bezogen auf das organische Lösungsmittel, beträgt, oder in Form ihrer Schmelzen als Flüssigmembran für die Trennung mehrwertiger Kationen von einwertigen Kationen aus wässrigen Lösungen oder für die selektive Trennung mehrwertiger, voneinander verschiedenen Kationen aus wässrigen Lösungen.

Vorzugsweise verwendet man Flüssigmembranen aus einem Succinylobernsteinsäurediester der Formel I, worin R für ein Alkyl oder Alkenyl mit 4 bis 18 C-Atomen steht, und einem organischen, mit Wasser nicht mischbaren Lösungsmittel.

Insbesondere verwendet man Flüssigmembranen aus einem aprotischen unpolaren Lösungsmittel und Succinylobernsteinsäurediester.

Die Succinylobernsteinsäurediester der Formel I sind bekannt und können z.B. nach dem in «Helvetica Chimica Acta», Vol. 62, 1979, Seite 1682, beschriebenen Verfahren durch Umesterung von Diäthylsuccinylsuccinat mit den entsprechenden Na-Alkoholaten hergestellt werden.

Aus dem GB-Patent 2,016,471 ist es ferner bekannt, mit Succinylobernsteinsäureestern modifizierte Polymere zur Herstellung von Membranen für Stofftrennverfahren zu verwenden und dass die modifizierten Polymeren metallchelatbildende Gruppen aufweisen. Durch eine Chelatisierung mit bestimmten Schwermetallsalzen kann die biologische Abbaubarkeit dieser Membranen wirksam inhibiert werden. Die hohe Hydrophobie der metallchelatisierten Succinylobernsteinsäurediester der Formel I und die Eignung der Verbindungen der Formel I als «carrier agents» in Flüssigmembranen ist dagegen aus der GB-PS 2,016,471 nicht zu entnehmen.

Da die Succinylobernsteinsäurediester in organischen Lösungsmitteln gut löslich sind, kann man für die Flüssigmembranen alle organischen Lösungsmittel, die mit Wasser nicht mischbar sind, verwenden. Vorzugsweise verwendet man aprotische unpolare Lösungsmittel, wie beispielsweise Benzol, Toluol und andere Kohlenwasserstoffe, wie n-Pentan oder n-Hexan, sowie chlorierte aliphatische oder aromatische Kohlenwasserstoffe, wie beispielsweise Dichlormethan, Chloroform, Äthylenchlorid oder Chlorbenzol.

Die Flüssigmembranen können bereits mit geringen Mengen an gelösten Succinylobernsteinsäurediestern eingesetzt werden. Der Anteil des im organischen Lösungsmittel gelösten Succinylobernsteinsäurediesters muss mindestens 0,01 Gewichts-%, bezogen auf das organische Lösungsmittel, betragen und kann bis zu 100 Gewichts-% variiert werden. Es ist auch möglich, lösungsmittelfreie Flüssigmembranen zu verwenden, indem man die Schmelze der Succinylobernsteinsäurediester der Formel I verwendet und das Trennungsverfahren bei erhöhter Temperatur, vorzugsweise knapp oberhalb des Schmelzpunktes des eingesetzten Succinylobernsteinsäurediesters, durchführt.

Hierfür eignen sich insbesondere Bis-(2-äthylhexyl)-succinylsuccinat (Schmelzpunkt: 30–33°C) oder Dioleylsuccinylsuccinat (Schmelzpunkt: 62°C) sowie Mischungen dieser Diester mit anderen Succinylobernsteinsäurediestern der Formel I. Wird das Trennungsverfahren bei erhöhter Temperatur durchgeführt, erreicht man im allgemeinen ebenfalls eine Beschleunigung des Kationenflusses durch die Flüssigmembran. Die Flüssigmembranen können in üblicher Weise für das kationenselektive Trennungsverfahren eingesetzt werden, wobei sich die apparative Durchführung des Trennungsverfahrens im wesentlichen nach dem spezifischen Gewicht der Flüssigmembran richtet. Weist z.B. die Flüssigmembran ein grösseres spezifisches Gewicht als die wässrige Lösung auf, so führt man das Trennungsverfahren vorteilhaft in einem U-Rohr durch, wobei die Flüssigmembran den unteren Teil des U-Rohres so ausfüllt, dass die in den beiden Schenkeln des U-Rohres sich befindenden wässrigen Lösungen vollständig voneinander getrennt sind. Enthält die Flüssigmembran ein hochsiedendes Lösungsmittel, so kann man das Trennungsverfahren vorteilhaft auch bei erhöhter Temperatur durchführen. Wenn das spezifische Gewicht der Flüssigmembran kleiner als Wasser ist, eignet sich zur Durchführung des Trennungsverfahrens ein umgekehrtes bzw. doppeltgebogenes U-Rohr.

Die Flüssigmembranen können auch in Form von gestützten Membranen Anwendung finden. Zur Erzielung einer besseren Membranstabilität lässt man die organischen Lösungen der Succinylobernsteinsäurediester der Formel I z.B. von einer porösen Kunststoff- oder auch Keramikmatrix aufsaugen. Hierfür eignen sich insbesondere die interzellulären Membranen, wie poröse Schaumstoffolien oder Glasfilter mit kapillaren Zwischenräumen, oder auch Zellfiltermembranen, wie sie z.B. in «Journal of the Chemical Society, Chemical Communications» Nr. 17/1979 (September) auf Seite 729 und 730 beschrieben werden.

Wie eingangs erwähnt, eignen sich die Flüssigmembranen hervorragend zum Trennen mehrwertiger Kationen von einwertigen Kationen als auch zum selektiven Trennen von mehrwertigen, verschiedenen Kationen aus wässrigen Lösungen nach dem Prinzip des gekoppelten Ionentransportes. Dabei wird die Flüssigmembran als Barriere zwischen zwei wässrigen Lösungen eingesetzt, so dass diese vollständig voneinander getrennt sind.

Gegenstand der vorliegenden Erfindung ist somit auch ein Verfahren zum Trennen mehrwertiger Kationen von einwertigen Kationen oder zur selektiven Trennung mehrwertiger, verschiedener Kationen aus wässrigen Lösungen nach dem Prinzip des gekoppelten Ionentransports und unter Verwendung einer Flüssigmembran, dadurch gekennzeichnet, dass man eine Flüssigmembran, bestehend aus einem im wesentlichen mit Wasser nicht mischbaren organischen Lösungsmittel und einem darin gelösten, in Wasser im wesentlichen unlöslichen Succinylobernsteinsäurediester der Formel I oder aus der Schmelze einer Verbindung der Formel I, zwischen zwei wässrigen, verschiedene pH-Werte aufweisenden Lösungen einsetzt, wobei die wässrige Lösung, in welche die mehrwertigen Kationen durch die Flüssigmembran transportiert werden, einen pH-Wert von 1 bis 8 aufweist und dieser niedriger sein muss als der pH-Wert der anderen wässrigen Lösung, in welcher die selektiv zu trennenden Kationen enthalten sind.

Vorzugsweise weist die wässrige Lösung, in welche die mehrwertigen Kationen durch die Flüssigmembran transportiert werden, einen pH-Wert von 1 bis 5 auf und ist dieser mindestens um eine ganze Zahl niedriger als der pH-Wert der anderen wässrigen Lösung, in welcher die selektiv zu trennenden Kationen enthalten sind.

Der pH-Wert der wässrigen Lösung, welche die zu trennenden Kationen enthält, kann sowohl im sauren als auch im schwach alkalischen Bereich liegen und muss höher sein als der pH-Wert der anderen wässrigen Lösung, in welche die Kationen transportiert werden. Der pH-Wert dieser Lösung kann sowohl mit anorganischen als auch mit organischen Säuren eingestellt werden. Vorteilhaft verwendet man Salz- oder Schwefelsäure.

Für die selektive Trennung von mehrwertigen, verschiedenen oder gleichen Kationen ist es angebracht, mehrere, hintereinander geschaltete Flüssigmembranen einzusetzen. Die Anzahl solcher hintereinander geschalteter Membranen richtet sich dabei nach der Anzahl der zu trennenden Kationen bzw. nach der Fliessgeschwindigkeit dieser Kationen in der Flüssigmembran.

Das erfindungsgemässe Verfahren eignet sich beispielsweise zur Reinigung galvanischer Abwässer bzw. zur Wiedergewinnung von Metallen aus diesen Abwässern, zur Anreicherung von Metallkationen aus schwach konzentrierten Lösungen, zur Gewinnung wertvoller Metalle aus Meerwasser oder Asche, insbesondere Industrieasche, oder zur Isotopentrennung.

Die folgenden Beispiele erläutern die Erfindung näher:

Beispiel 1

In ein U-Rohr wurden 30 ml einer 0,5 molaren Lösung von Succinylobernsteinsäuredioleylester in Chloroform eingefüllt. Der eine Arm des U-Rohres wurde dann mit 20 ml einer 0,25 molaren wässrigen Cu-Acetat-Lösung und der andere Arm des U-Rohres mit 20 ml einer 10%-igen wässrigen Salzsäurelösung beschickt. Beide wässrigen Lösungen waren durch die unten im U-Rohr sich befindende Chloroformphase voneinander getrennt. Der anfängliche pH-Wert der Cu-Acetat-Lösung betrug 4,9 und der der Salzsäurelösung ~1.

Nach 138 Tagen betrug die Konzentration der $Cu^{2+}$-Ionen in der Salzsäurelösung $15{,}5 \times 10^{-2}$ mol/l. In der Cu-Acetat-Lösung konnten keine $Cl^-$-Ionen ermittelt werden, was für einen wirklich stattgefundenen $Cu^{2+}/H^+$-Austausch spricht.

Die während des $Cu^{2+}$-Ionenflusses in der anfänglich $Cu^{2+}$-ionenfreien Salzsäurelösung ermittelten Konzentrationen an $Cu^{2+}$-Ionen sind in Tabelle 1 angegeben.

Tabelle 1: Konzentration der $Cu^{2+}$-Ionen nach Ionentransport durch die Flüssigmembran

| Tage | 1,75 | 4,6 | 6 | 11 | 14 | 20,8 | 25 | 29 | 33 | 39 | 54 | 78 | 98 | 138 |
|---|---|---|---|---|---|---|---|---|---|---|---|---|---|---|
| $10^{-2}$ mol/l $Cu^{2+}$ | 0,025 | 0,44 | 1,1 | 1,4 | 1,73 | 2,4 | 2,83 | 3,05 | 3,05 | 3,4 | 5,1 | 6,53 | 11,5 | 15,5 |

In einem Blindversuch wurde obiges Beispiel wiederholt, doch enthielt die Chloroformphase keinen Succinylobernsteinsäuredioleylester. Nach 116 Tagen betrug die Konzentration an $Cu^{2+}$-Ionen in der Salzsäurelösung lediglich $7{,}6 \times 10^{-4}$ mol/l. Die in der Salzsäurelösung ermittelten Konzentrationen an $Cu^{2+}$-Ionen sind in Tabelle 2 zusammengestellt.

Tabelle 2: Konzentration der $Cu^{2+}$-Ionen in der Salzsäurelösung

| Tage | 8 | 12 | 18 | 33 | 53 | 63 | 76 | 116 |
|---|---|---|---|---|---|---|---|---|
| $10^{-5}$ mol/l $Cu^{2+}$ | 2,3 | 2,3 | 2,3 | 9,9 | 17,9 | 25,0 | 36,0 | 76,0 |

Beispiel 2

Ein U-Rohr wurde mit 30 ml einer 0,5 m Lösung von Succinylobernsteinsäuredioleylester in Chloroform in zwei Abteilungen getrennt. Beide Arme wurden mit je 30 ml einer 0,5 m wässrigen Cu-acetat Lösung versehen. Während in der einen Cu-Salzlösung der pH-Wert 5,5 (Lösung b) betrug, wurde die Cu-Salzlösung in dem anderen Arm des U-Rohres mit Salzsäure auf pH 2 (Lösung a) angesäuert. Es setzte ein Fluss von $Cu^{2+}$-Ionen in die Chloroformphase und von dort in die Salzsäurelösung mit dem niedrigeren pH-Wert ein. Nach 116 Tagen betrug die Konzentration an $Cu^{2+}$-Ionen in der Lösung b $1{,}9 \times 10^{-2}$ mol/l und in Lösung a $7{,}8 \times 10^{-2}$ mol/l. Die in Lösung a und Lösung b ermittelten Konzentrationen sind in Tabelle 3 wiedergegeben.

Tabelle 3: $Cu^{2+}$-Ionenkonzentrationen in Lösung a und Lösung b

| Tage | | 4 | 8 | 12 | 14,75 | 18 | 33 | 53 | 63 | 76 | 116 |
|---|---|---|---|---|---|---|---|---|---|---|---|
| $10^{-2}$ mol/l $Cu^{2+}$ | Lösung a | 4,9 | 4,9 | 4,9 | 4,9 | 4,4 | 4,4 | 5,4 | 5,3 | 6,2 | 7,8 |
| | Lösung b | 5,0 | 4,8 | 4,8 | 4,6 | 4,4 | 4,4 | 4,0 | 3,5 | 3,2 | 1,9 |

Beispiel 3

Ein U-Rohr, welches die in Beispiel 1 beschriebene Chloroform-Lösung als Flüssigmembran enthielt, wurde auf der einen Seite mit einer wässrigen Lösung enthaltend eine Mischung aus Cu-Acetat (Konzentration: $8{,}66 \times 10^{-2}$ mol/l), Ca-Acetat (Konzentration: $4{,}24 \times 10^{-2}$ mol/l) und K-Acetat (Konzentration: $16.9 \times 10^{-2}$ mol/l) versehen. Der anfängliche pH-Wert dieser Acetat-Lösung betrug 5,75. Die andere Seite des U-Rohres

wurde mit einer wässrigen Salzsäure-Lösung mit einem pH-Wert von ~1 aufgefüllt.

Nach 76 Tagen betrug in der Salzsäurelösung die Konzentration der $Cu^{2+}$-Ionen $8,0 \times 10^{-3}$ mol/l und die der $Ca^{2+}$-Ionen $3,74 \times 10^{-5}$ mol/l. Obwohl die Konzentration der $K^{+}$-Ionen in der Acetat-Lösung am höchsten war, konnten nach 76 Tagen keine $K^{+}$-Ionen in der Salzsäure-Lösung festgestellt werden. Die in der Salzsäurelösung ermittelten Ionenkonzentrationen sind in Tabelle 4 angegeben.

Tabelle 4: Ionenkonzentrationen nach Transport durch die Flüssigmembran

| Tage | 3 | 7 | 11 | 17 | 32 | 52 | 63 | 76 | 116 |
|---|---|---|---|---|---|---|---|---|---|
| $10^{-3}$ mol/l $Cu^{2+}$ | 0,17 | 0,35 | 0,35 | 0,48 | 1,5 | 3,9 | 5,2 | 8,0 | 10,5 |
| $10^{-5}$ mol/l $Ca^{2+}$ | 1,75 | 1,5 | 1,5 | 2,2 | 3,1 | 4,0 | 4,9 | -*) | - |

*) bedeutet, dass keine Konzentrationsbestimmung durchgeführt wurde.

Beispiel 4

3 U-Rohre wurden mit der Chloroformlösung gemäss Beispiel 1 als Flüssigmembran gefüllt. Je ein Arm der drei U-Rohre wurden mit wässriger Salzsäure-Lösung mit einem pH-Wert von ~1 gefüllt und die anderen Arme der U-Rohre mit einer Co-Acetat-Lösung (Konzentration: 0,25 mol/l; pH-Wert 6,9) einer Ni-Acetat-Lösung (Konzentration: 0,25 mol/l; pH-Wert 6,9) oder einer Ca-Acetat-Lösung (Konzentration: 0,25 mol/l; pH-Wert 8,2) versehen.

Nach 20,8 Tagen betrug in der Salzsäurelösung die Konzentration der $Co^{2+}$Ionen $8,15 \times 10^{-4}$ mol/l, die der $Ni^{2+}$-Ionen $6,5 \times 10^{-4}$ mol/l und die der $Ca^{2+}$-Ionen $5,0 \times 10^{-4}$ mol/l. In keiner der drei Acetat-Lösungen konnten $Cl^{-}$-Ionen festgestellt werden.

Die in der jeweiligen Salzsäurelösung ermittelten Ionenkonzentrationen sind in Tabelle 5 angegeben.

Tabelle 5: Ionenkonzentrationen nach Transport durch die Flüssigmembranen

| Tage | | 1 | 1,75 | 4,6 | 6 | 11 | 14 | 20,6 |
|---|---|---|---|---|---|---|---|---|
| | $Co^{2+}$ | - | 0,17 | 0,34 | 1,19 | 2,02 | 5,43 | 8,14 |
| $10^{-4}$ mol/l | $Ni^{2+}$ | - | - | - | - | 6,80 | 22,28 | 64,96 |
| | $Ca^{2+}$ | 0,025 | - | 0,175 | 0,599 | 0,848 | 3,144 | 5,015 |

Beispiel 5

Eine aus Polypropylen bestehende poröse, hydrophobische Folie wurde bei 60°C mit Succinylobernsteinsäuredioleylester imprägniert, indem man die Folie bei dieser Temperatur in eine den Succinylobernsteinsäureester enthaltenden Chloroformlösung legt. Nach dem Abtropfen wurde die imprägnierte Folie dann als Trennwand zwischen zwei Zellen montiert, wobei die eine Zelle wässrige Salzsäurelösung mit einem pH-Wert von ~1 und die andere Zelle eine wässrige Cu-Acetat-Lösung mit einer Konzentration von $4,3 \times 10^{-2}$ mol/l und einem pH-Wert von ~5 enthielt. Das die beiden Zellen enthaltende Versuchsgefäss wurde auf 80°C gehalten und die Bildung der $Cu^{2+}$-Ionenkonzentration in der Salzsäurelösung laufend verfolgt. Nach 36,1 Tagen betrug die $Cu^{2+}$-Ionenkonzentration in der wässrigen Salzsäurelösung $5,81 \times 10^{-5}$ mol/l. In der nachfolgenden Tabelle 6 sind die gemessenen Ionenkonzentrationen angegeben.

Tabelle 6: $Cu^{2+}$-Konzentration nach Ionentransport durch die imprägnierte Folie

| Tage | 0,8 | 1,8 | 5,8 | 6,8 | 8,8 | 9,8 | 12,8 | 15,8 | 19,8 | 22,8 | 27,1 | 36,1 |
|---|---|---|---|---|---|---|---|---|---|---|---|---|
| $10^{-6}$ mol/l $Cu^{2+}$ | 1,9 | 1,9 | 5,8 | 8,0 | 11,3 | 16,5 | 25,2 | 24,3 | 29,9 | 37,6 | 37,4 | 58,1 |

Beispiel 6

In ein U-Rohr, welches im unteren Teil mit einer 0,5 m Lösung von Succinylobernsteinsäuredioleylester in Chloroform gefüllt war, wurden auf der einen Seite 30 ml einer Uranyl-Acetat-Lösung (Konzentration 0,16 mol/l; pH-Wert ~4) zugegeben. Die andere Seite des U-Rohres wurde mit wässriger Salzsäurelösung (pH-Wert ~1) versehen. Nach 7 Tagen betrug die Konzentration der $UO_2^{2+}$-Ionen in der ursprünglich uranyl-freien Salzsäurelösung $3 \times 10^{-5}$ mol/l und nach 14 Tagen $6,52 \times 10^{-5}$ mol/l.

Beispiel 7

In ein U-Rohr, welches im unteren Teil mit der in Beispiel 6 verwendeten Chloroform-Lösung versehen war, wurde auf der einen Seite mit einer wässrigen Acetat-Lösung enthaltend Uranylacetat in einer Konzentration von $8,8 \times 10^{-2}$ mol/l und Cu-Acetat in einer Konzentration von $9,8 \times 10^{-2}$ mol/l, die einen pH-Wert von ~5 aufwies, eingefüllt. Die andere Seite des U-Rohres wurde mit einer wässrigen Salzsäurelösung, die einen pH-Wert von 1 aufwies, versehen.

Nach 7 bzw. 14 Tagen betrug der Gehalt an $UO_2^{2+}$-Ionen in der Salzsäurelösung $2,43 \times 10^{-5}$ mol/l bzw. $6,08 \times 10^{-5}$ mol/l und der $Cu^{2+}$-Ionen $25,2 \times 10^{-5}$ mol/l bzw. $51,5 \times 10^{-5}$ mol/1.

Beispiel 8

In ein U-Rohr wurden 30 ml einer 0,5 molaren Lösung von Succinylobernsteinsäurediethylester in Chloroform eingefüllt. Der eine Arm des U-Rohres wurde dann mit 25 ml einer wässrigen Acetatsalzlösung (Lösung a), enthaltend $9,6 \times 10^{-2}$ mol/l $Cu^{2+}$, $8,5 \times 10^{-2}$ mol/l $Ni^{2+}$, $8,6 \times 10^{-2}$ mol/l $Cd^{+2}$, $8 \times 10^{-2}$ mol/l $Ca^{2+}$ und $13 \times 10^{-2}$ mol/$K^+$, und der andere Arm des U-Rohres mit 25 ml einer 10%igen wässrigen Salzsäurelösung (Lösung b) beschickt. Beide wässrige Lösungen waren durch die Chloroformphase voneinander getrennt.

Nach 150 Tagen betrug die Konzentration der Kupferionen in der Salzsäurelösung $6,9 \times 10^{-2}$ mol/l, während die Konzentration aller anderen Kationen niedriger als $10^{-4}$ mol/l war. Die Abreicherung der Kupferionen in Lösung a und deren Anreicherung in Lösung b ist in der folgenden Tabelle zusammengefasst.

| Tage | | 0 | 14 | 56 | 100 | 150 |
|---|---|---|---|---|---|---|
| c($Cu^{2+}$) mol/l | Lösung a | $9,6 \times 10^{-2}$ | $3,5 \times 10^{-2}$ | $4,8 \times 10^{-3}$ | $1,5 \times 10^{-3}$ | $4,6 \times 10^{-4}$ |
| | Lösung b | $< 2.10^{-4}$ | $2,7 \times 10^{-2}$ | $4,3 \times 10^{-2}$ | $6,0 \times 10^{-2}$ | $6,9 \times 10^{-2}$ |

**Patentansprüche**

1. Verwendung von in Wasser im wesentlichen unlöslichen Succinylobernsteinsäurediestern der Formel I

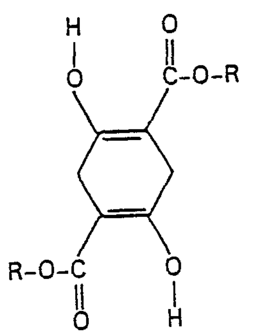

(I),

worin R für ein Alkyl, Alkenyl oder Cycloalkyl mit bis zu 24 C-Atomen steht, gelöst in einem im wesentlichen mit Wasser nicht mischbaren organischen Lösungsmittel, wobei der Anteil des Succinylobernsteinsäurediesters im organischen Lösungsmittel mindestens 0,01 Gewichts-%, bezogen auf das organische Lösungsmittel, beträgt, oder in Form ihrer Schmelzen als Flüssigmembran für die Trennung mehrwertiger Kationen von einwertigen Kationen aus wässrigen Lösungen oder für die selektive Trennung mehrwertiger, voneinander verschiedenen Kationen aus wässrigen Lösungen.

2. Verwendung gemäss Anspruch 1, wobei ein Succinylobernsteinsäurediester der Formel I, worin R für ein Alkyl oder Alkenyl mit 4 bis 24 C-Atomen steht, in einem organischen, mit Wasser nicht mischbaren Lösungsmittel gelöst ist.

3. Verwendung gemäss Anspruch 1, wobei ein Succinylobernsteinsäurediester der Formel I, worin R für ein Alkyl oder Alkenyl mit 4 bis 18 C-Atomen steht, in einem organischen, mit Wasser nicht mischbaren Lösungsmittel gelöst ist.

4. Verwendung gemäss Anspruch 1, wobei ein Succinylobernsteinsäurediester mit einem aprotischen unpolaren Lösungsmittel gelöst ist.

5. Verfahren zum Trennen mehrwertiger Kationen von einwertigen Kationen oder zur selektiven Trennung mehrwertiger, voneinander verschiedenen Kationen aus wässrigen Lösungen nach dem Prinzip des gekoppelten Ionentransports und unter Verwendung einer Flüssigmembran, dadurch gekennzeichnet, dass man eine Flüssigmembran, bestehend aus einem im wesentlichen mit Wasser nicht mischbaren organischen Lösungsmittel und einem darin gelösten, in Wasser im wesentlichen unlöslichen Succinylobernsteinsäurediester der Formel I gemäss Anspruch 1 oder aus der Schmelze einer Verbindung der Formel I, zwischen zwei wässrigen, verschiedene pH-Werte aufweisenden Lösungen einsetzt, wobei die wässrige Lösung, in welche die mehrwertigen Kationen durch die Flüssigmembran transportiert werden, einen pH-Wert von 1 bis 8 aufweist und dieser niedriger sein muss als der pH-Wert der anderen wässrigen Lösung, in welcher die selektiv zu trennenden Kationen enthalten sind.

6. Verfahren gemäss Anspruch 5, dadurch gekennzeichnet, dass die wässrige Lösung, in welche die mehrwertigen Kationen durch die Flüssigmembran transportiert werden, einen pH-Wert von 1 bis 5 aufweist und dieser mindestens um eine ganze Zahl niedriger ist als der pH-Wert der anderen wässrigen Lösung, in welcher die selektiv zu trennenden Kationen enthalten sind.

**Claims**

1. Use of essentially water-insoluble succinylosuccinic acid diesters of the formula I

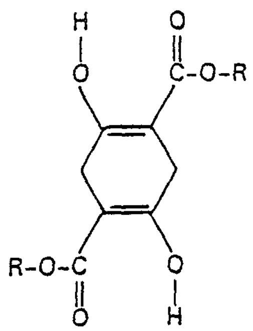

(I),

wherein R is an alkyl, alkenyl or cycloalkyl having up to 24 C atoms, dissolved in an essentially water-immiscible organic solvent, the proportion of succinylosuccinic acid diester in the organic solvent being at least 0.01% by weight, relative to the organic solvent, or of these compounds in the form of a melt, as a liquid membrane for the separation of polyvalent cations from monovalent cations, from aqueous solutions, or for the selective separation of different polyvalent cations from aqueous solutions.

2. Use according to claim 1, whereby a succinylosuccinic acid diester of the formula I wherein R is an alkyl or alkenyl having 4 to 24 C atoms, is dissolved in an organic, water-immiscible solvent.

3. Use according to claim 1, whereby a succinylosuccinic acid diester of the formula I wherein R is an alkyl or alkenyl having 4 to 18 C atoms, is dissolved in an organic, water-immiscible solvent.

4. Use according to claim 1, whereby the dioleyl succinylosuccinate is dissolved in an aprotic non-polar solvent.

5. Process for the separation of polyvalent cations from monovalent cations or for the selective separation of different polyvalent cations from aqueous solutions, according to the principle of coupled ion transport, and with the use of a liquid membrane, characterised in that there is used a liquid membrane, consisting of an essentially water-immiscible organic solvent and an essentially water-insoluble succinylosuccinic acid diester of the formula I according to claim 1 dissolved therein, or of a melt of a compound of the formula I, between two aqueous solutions having different pH values, the aqueous solution into which the polyvalent cations are transported through the liquid membrane having a pH value of 1 to 8, this value having to be lower than the pH value of the other aqueous solution, in which the cations to be selectively separated are contained.

6. Process according to claim 5, characterised in that the aqueous solution into which the polyvalent cations are transported through the liquid membrane has a pH value of 1 to 5, this value being at least one whole number lower than the pH value of the other aqueous solution in which the cations to be selectively separated are contained.

**Revendications**

1. Utilisation de diesters de l'acide succino-succinique pratiquement insolubles dans l'eau qui répondent à la formule (I):

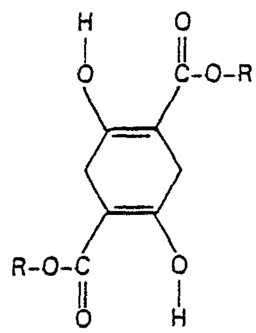

(I),

dans laquelle R représente un radical alkyle, alcényle ou cycloalkyle contenant au maximum 24 atomes de carbone, à l'état dissous dans un solvant organique pratiquement non miscible à l'eau, la teneur du solvant organique en le diester sulfo-succinique étant d'au moins 0,01% en poids par rapport au solvant organique, ou à l'état fondu, comme membrane liquide pour séparer des cations polyvalents de cations monovalents à partir de solutions aqueuses, ou pour séparer sélectivement des cations polyvalents différents les uns des autres, à partir de solutions aqueuses.

2. Utilisation selon la revendication 1, selon laquelle on utilise un diester succino-succinique de formule (I) dans lequel R représente un radical alkyle ou alcényle contenant de 4 à 24 atomes de carbone, sous la forme d'une solution dans un solvant organique non miscible à l'eau.

3. Utilisation selon la revendication 1, selon laquelle on utilise un diester succino-succinique de formule (I) dans lequel R représente un radical alkyle ou alcényle contenant de 4 à 18 atomes de carbone, sous la forme d'une solution dans un solvant organique non miscible à l'eau.

4. Utilisation selon la revendication 1, selon laquelle on utilise le succino-succinate de dioléyle dissous avec un solvant non polaire aprotique.

5. Procédé pour séparer des cations polyvalents de cations monovalents, ou pour séparer sélectivement des cations polyvalents différents les uns des autres, à partir de solutions aqueuses, selon le principe du transport ionique couplé et au moyen d'une membrane liquide, procédé caractérisé en ce qu'on utilise une membrane liquide consitituée d'un solvant organique pratiquement non miscible à l'eau et, en solution dans celui-ci, d'un diester succino-succinique de formule (I) selon la revendication 1 pratiquement insoluble dans l'eau, ou consituée d'un composé de formule (I) à l'état fondu, entre deux solutions aqueuses de pH différents, la solution aqueuse vers laquelle les cations polyvalents sont transportés à travers la membrane liquide ayant un pH de 1 à 8 et ce pH devant être inférieur à celui de l'autre solution aqueuse, dans laquelle se trouvent les cations à séparer sélectivement.

6. Procédé selon la revendication 5, caractérisé en ce que la solution aqueuse vers laquelle les cations polyvalents sont transportés à travers la membrane liquide a un pH de 1 à 5 et ce pH est inférieur d'au moins une unité à celui de l'autre solution aqueuse, dans laquelle se trouvent les cations à séparer sélectivement.